# EUROPÄISCHE PATENTSCHRIFT

(11) **EP 2 769 923 B1**
(45) Veröffentlichungstag und Bekanntmachung des Hinweises auf die Patenterteilung: **23.08.2017**
(21) Anmeldenummer: 13156424.7
(22) Anmeldetag: 22.02.2013
(51) Int. Cl.: B29C 31/00, B29C 65/18, B65B 9/04, B65B 47/06, B65B 59/04, B29C 51/08, B65B 31/04, B65B 51/14, B65B 61/06, B65B 61/08

(54) **Tiefziehverpackungsmaschine mit Siegelstation und Verfahren**
Deep draw packaging machine with sealing station and method
Machine d'emballage par emboutissage profond avec poste de scellage et procédé

(43) Veröffentlichungstag der Anmeldung: 27.08.2014
(73) Patentinhaber: MULTIVAC Sepp Haggenmüller SE & Co. KG, 87787 Wolfertschwenden (DE)
(72) Erfinder: Geble, Christian, 87466 Oy/Mittelberg (DE)
(74) Vertreter: Grünecker Patent- und Rechtsanwälte PartG mbB

(56) Entgegenhaltungen:
- EP-A1- 1 520 682
- WO-A1-2007/107703
- WO-A2-2011/055325
- DE-A1-102004 051 923
- DE-A1-102011 015 561
- FR-A1- 2 928 626
- US-A- 4 056 922
- US-A- 4 691 500
- US-A1- 2011 139 661

## Beschreibung

Die Erfindung bezieht sich auf eine Tiefziehverpackungsmaschine gemäß dem Oberbegriff des Anspruchs 1 und ein Verfahren zum Wechsel einer Siegelbrille und einer Siegelplatte an einer Siegelstation einer Tiefziehverpackungsmaschine mit den Merkmalen des Anspruchs 9.

US 2011/0139661 A1 offenbart eine Schalenverschließmaschine mit Zentrierstiften zum Ausrichten einer zu versiegelnden Schale.

WO 2011/055325 A2 offenbart eine Verpackungsmaschine mit verdrängbaren Begasungs- und Evakuierstiften.

DE 10 2004 051 923 A1 offenbart eine Tiefziehverpackungsmaschine gemäß dem Oberbegriff des Anspruchs 1 mit einer Siegelstation, die dazu ausgelegt ist, eine Siegelplatte zusammen mit einer Basisplatte, die Heizelemente umfasst, einer Abdeckplatte, einer Druckplatte und einer weiteren Basisplatte als gemeinsame Baugruppe, die lösbar an einem Gehäuse eines Siegelwerkzeugoberteils angebracht ist, auf ein Siegelwerkzeugunterteil aufliegen zu lassen, damit die Zugänglichkeit zum Wechseln oder zum Warten dieser Werkzeuge ermöglicht wird. Um die Siegelplatte von dieser Baugruppe entfernen zu können und auch Teile des Siegelwerkzeugunterteils, die formatabhängig ausgeführt sind, wechseln zu können, wird die Baugruppe als eine Einheit aus der Maschine entnommen und außerhalb der Tiefziehverpackungsmaschine kann die Siegelplatte von der Basisplatte abgeschraubt werden.

EP 0 467 069 A1 zeigt eine Tiefziehverpackungsmaschine mit einer Formstation und einer Siegelstation, die jeweils Werkzeugunterteile umfassen, die seitlich auf Schienen aus der Tiefziehverpackungsmaschinen herausgezogen werden können, um formatabhängige Einsätze oder Teiler am Werkzeugunterteil wechseln zu können, ohne dass eine Folienbahn oberhalb der Werkzeugunterteile entfernt werden muss.

Bekannt sind auch Tiefziehverpackungsmaschinen, bei denen die Siegelplatte mit Schraubverbindungen, die an der Oberseite eines Siegelwerkzeugoberteils für einen Bediener zugänglich sind, mit dem Siegelwerkzeugoberteil lösbar verbunden ist. Vor dem Lösen der Siegelplatte müssen Folienbahnen, die durch die Siegelstation geführt werden, so weit entfernt oder ausgeschnitten werden, dass der Bediener mit einer Hand, die durch einen hitzebeständigen Sicherheitshandschuh geschützt ist, unter die noch erwärmte Siegelplatte reichen kann, um nach dem Lösen der Schraubverbindungen die Siegelplatte mit der Hand aufzunehmen und aus der Siegelstation zu entnehmen. Ein solches Handling ist zum einen gefährlich, da oft nur mit einer Hand ein noch stark erwärmtes Werkzeug erfasst werden muss, und zum anderen sind größere und damit schwerere Siegelplatten mit einer Hand nicht mehr auf dieses Weise ergonomisch handhabbar. Die Montage bzw. das

Einführen der Siegelplatte in das Siegelwerkzeugoberteil ist schwierig, zumal üblicherweise nur ein geringer Spalt zwischen der Außenkontur der Siegelplatte und der passenden Innenkontur des Siegelwerkzeugoberteils vorgesehen ist. Die Siegelplatte muss solange an dem Siegelwerkzeugoberteil gehalten werden, bis die Siegelplatte ausreichend bzw. wenigstens teilweise befestigt ist.

Aufgabe der vorliegenden Erfindung ist es, das Wechseln einer Siegelbrille und einer Siegelplatte einer Siegelstation einer Tiefziehverpackungsmaschine zu erleichtern und sicherer zu gestalten.

Diese Aufgabe wird gelöst durch eine Tiefziehverpackungsmaschine mit den Merkmalen des Anspruchs 1 bzw. durch ein Verfahren zum Betrieb einer solchen Tiefziehverpackungsmaschine mit den Merkmalen des Anspruchs 9. Vorteilhafte Weiterbildungen der Erfindung sind in den Unteransprüchen angegeben.

Die erfindungsgemäße Tiefziehverpackungsmaschine weist eine Siegelstation auf, die eine Hubeinrichtung, eine Siegelplatte und eine Siegelbrille umfasst. Die Siegelplatte ist lösbar an einem Siegelwerkzeugoberteil angeordnet und die Siegelbrille ist lösbar an einem Siegelwerkzeugunterteil angeordnet. Die Tiefziehverpackungsmaschine zeichnet sich dadurch aus, dass die Siegelbrille Zentrierhilfen zum Zentrieren der Siegelplatte auf der Siegelbrille aufweist, wobei die Zentrierhilfen so gestaltet sind, dass sie beim Klemmen einer Folienbahn zwischen der Siegelbrille und dem Siegelwerkzeugoberteil durch das Siegelwerkzeugoberteil unterhalb der Folienbahn verdrängbar ausgeführt sind. Somit kann eine Folienbahn zwischen der Siegelbrille und dem Siegelwerkzeugoberteil ringsum geklemmt werden und eine Kammer erzeugen, in der die Verpackung vor dem Versiegeln mit einer Deckelfolie evakuiert und/oder begast werden kann. Dabei übt die Zentrierhilfe nur Kräfte aus, die der Folienbahn keinen Schaden zuführen und zu keiner Faltenbildung der Folienbahn innerhalb der Siegelstation führen. Die Zentrierhilfen müssen nach dem Wechselvorgang der Siegelplatte nicht aus der Siegelbrille händisch entfernt werden, somit liegt eine automatisch wirkende Zentrierung der Siegelplatte auf der Siegelbrille vor. Die Siegelplatte kann manuell auf die Siegelbrille zwischen oder auf die Zentrierhilfen abgelegt werden; und bei der Bewegung der Siegelplatte und der Siegelbrille mittels der Hubeinrichtung in Richtung des Siegelwerkzeugoberteils bleibt die Siegelplatte in einer durch die Zentrierung festgelegten Position, um positionsgenau und ohne Kollision in das Siegelwerkzeugoberteil einfahren zu können.

Vorzugsweise ist dabei die Siegelplatte von der Siegelbrille aufnehmbar. Beispielsweise befindet sich die Siegelbrille in einer oberen Position, bei der sie mit der Siegelplatte in Kontakt steht. Die Befestigung der Siegelplatte am Siegelwerkzeugoberteil wird gelöst und die Siegelplatte liegt mit ihrem Gewicht auf der Siegelbrille auf. Hierbei ist kein Zugriff einer Bedienperson an die erwärmte Siegelplatte vorgesehen.

In einer vorteilhaften Ausführung ist das Siegelwerkzeugunterteil gemeinsam mit der Siegelbrille und der Siegelplatte seitlich aus der Tiefziehverpackungsmaschine zum Wechseln der Siegelbrille und Siegelplatte herausbewegbar. In dieser seitlichen Wechselposition sind die Siegelplatte und die Siegelbrille durch die Bedienperson ergonomisch gut zugänglich, und die erwärmte Siegelplatte ist somit mittels der nicht erwärmten Siegelbrille unter einer verminderten Gefährdung wechselbar.

Bevorzugt ist die Siegelplatte mittels Schraubverbindungen am Siegelwerkzeugoberteil fixierbar und die Schrauben sind von außerhalb des Siegelwerkzeugoberteils zugänglich. Alternativ dazu ist die Siegelplatte automatisch mittels wenigstens eines Aktors am Siegelwerkzeugoberteil fixierbar. Der Vorteil beider Ausführungen ist, dass bei einem Wechsel der Formataufteilung der Verpackungen nicht das gesamte Siegelwerkzeugoberteil mit ggf. seinen Heizelementen, seinem Kühlwasserkreislauf und Betätigungselementen zum Erzeugen eines Siegeldrucks beispielsweise mittels Membrane, sondern lediglich die Siegelplatte als mit den Verpackungen zusammenwirkendes Bauteil gewechselt werden muss. Dies reduziert den Aufwand und die Zeit zum Umrüsten der Tiefziehverpackungsmaschine und verringert das Risiko von Verletzungen durch eine noch stark erwärmte Siegelplatte.

Bevorzugt weist die Siegelbrille wenigstens an zwei, vorzugsweise an vier Ecken Zentrierungshilfen zum Orientieren jeweils einer Ecke der Siegelplatte auf. Eine Reduzierung des Spiels der Siegelplatte zur Siegelbrille ermöglicht es, mit sehr geringen seitlichen Abständen der Siegelplatte innerhalb des Siegelwerkzeugoberteils auszukommen, wobei das Siegelwerkzeugoberteil eine kongruente Aussparung an der Innenseite zur Aufnahme der Siegelplatte aufweisen kann.

Vorzugsweise umfasst eine Zentrierhilfe einen oder mehrere gefederte Stifte. Dabei sind die federten Stifte bevorzugt derart in die Siegelbrille in einer Bewegungsrichtung der Hubeinrichtung absenkbar, dass die Folienbahn nicht beschädigt wird. Diese Ausführung ermöglicht eine konstruktiv einfache und damit auch kostengünstige Konstruktion.

Denkbar ist auch eine pneumatische Betätigung der Stifte, bei der eine Federung der Stifte entfallen könnte.

Das erfindungsgemäße Verfahren zum gemeinsamen Wechseln einer Siegelbrille und einer Siegelplatte an einer Siegelstation einer Tiefziehverpackungsmaschine sieht folgende Schritte vor:
- Anheben der Siegelbrille mittels einer Hubeinrichtung nach oben an ein Siegelwerkzeugoberteil, nachdem Folienbahnen dazwischen entfernt wurden,
- Lösen der Siegelplatte von dem Siegelwerkzeugoberteil, um die Siegelplatte auf der Siegelbrille abzulegen,
- Absenken der Siegelbrille und der Siegelplatte mittels der Hubeinrichtung, wobei Zentrierhilfen, die an der Siegelbrille vorgesehen sind, mit der Siegelplatte zusammenwirken.

Die Zentrierhilfen müssen nach dem Wechselvorgang der Siegelplatte nicht aus der Siegelbrille händisch entfernt werden, somit liegt eine automatisch wirkende Zentrierung der Siegelplatte auf der Siegelbrille vor.

Vorzugsweise werden die Siegelbrille und die Siegelplatte in einer unteren Wechselstellung der Hubeinrichtung seitlich aus der Tiefziehverpackungsmaschine heraus bewegt, um die Siegelbrille und die Siegelplatte für einen Wechsel oder für Wartungszwecke zugänglich zu machen. So ist es einer Bedienperson möglich, ein Umrüsten von Werkzeugen an der Siegelstation ergonomisch durchzuführen.

In einer vorteilhaften Ausführung hebt die Siegelbrille mittels der Hubeinrichtung die Siegelplatte nach oben bis an das Siegelwerkzeugoberteil an, um die Siegelplatte an dem Siegelwerkzeugoberteil zu befestigen.

Erfindungsgemäß werden die Zentrierhilfen in der Siegelbrille verdrängt, sobald die Siegelplatte in dem Siegelwerkzeugoberteil befestigt wird und dabei die Siegelbrille mit dem Siegelwerkzeugoberteil in Kontakt steht.

Im Folgenden wird ein vorteilhaftes Ausführungsbeispiel der Erfindung anhand einer Zeichnung näher erläutert. Im Einzelnen zeigen:
- Fig. 1: eine schematische Seitenansicht einer erfindungsgemäßen Tiefziehverpackungsmaschine,
- Fig. 2: eine Siegelstation in geöffneten Stellung,
- Fig. 3: die Siegelstation in einer unteren Wechselposition, nachdem die Siegelplatte von der Siegelbrille aufgenommen wurde,
- Fig. 4: die Siegelstation mit der Siegelbrille und der Siegelplatte in einer seitlichen Wechselposition,
- Fig. 5: eine Draufsicht auf die Siegelbrille,
- Fig. 6: eine Schnittansicht einer Zentrierhilfe und
- Fig. 7: ein Ausschnitt der Siegelstation in einer geschlossenen Position in einer Schnittdarstellung.

Gleiche Komponenten sind in den Figuren durchgängig mit gleichen Bezugszeichen versehen.

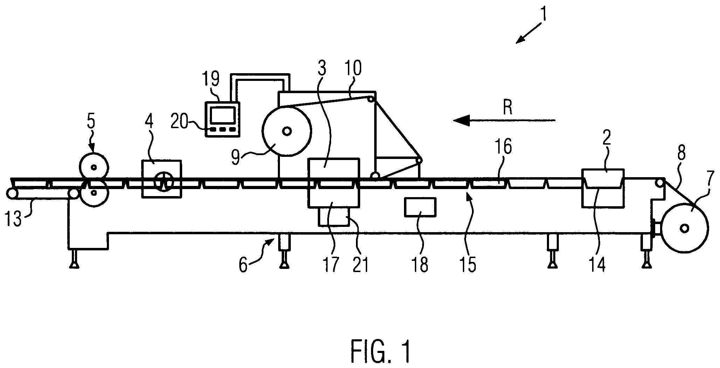

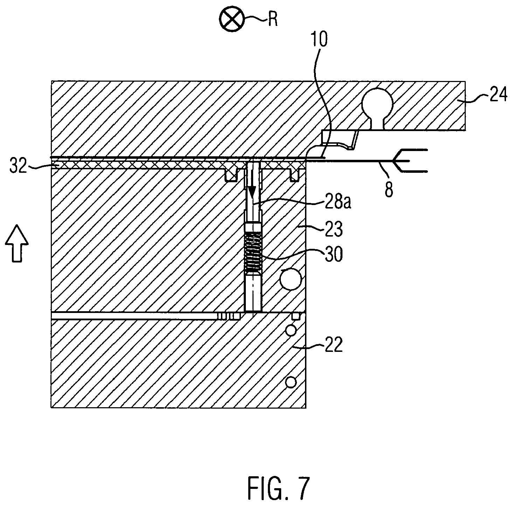

Fig. 1 zeigt in schematischer Seitenansicht eine erfindungsgemäße Tiefziehverpackungsmaschine 1. Die Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in einer Produktionsrichtung R an einem Maschinenrahmen 6 angeordnet sind. Eingangsseitig befindet sich an dem Maschinenrahmen 6 eine Zufuhrrolle 7, von der eine Folienbahn 8 abgezogen wird. Im Bereich der Siegelstation 3 ist ein Materialspeicher 9 vorgesehen, von dem eine Deckelfolie 10 abgezogen wird. Ausgangsseitig ist an der Tiefziehverpackungsmaschine eine Abfuhreinrichtung 13 in Form eines Transportbandes vorgesehen, mit der fertige, vereinzelte Verpackungen abtransportiert werden. Ferner weist die Tiefziehverpackungsmaschine 1 eine Vorschubeinrichtung auf, die die Folienbahn 8 ergreift und diese pro Hauptarbeitstakt in der Produktionsrichtung R weitertransportiert. Die Vorschubeinrichtung kann zum Beispiel durch beidseitig angeordnete Klammerketten ausgeführt sein, wie in Fig. 7 gezeigt.

In der dargestellten Ausführungsform ist die Formstation 2 als eine Tiefziehstation ausgebildet, bei der in die Folienbahn 8 durch Tiefziehen Mulden 14 geformt werden. Dabei kann die Formstation 2 derart ausgebildet sein, dass in der Richtung senkrecht zur Produktionsrichtung R mehrere Mulden nebeneinander gebildet werden. In Produktionsrichtung R hinter der Formstation 2 ist eine Einlegestrecke 15 vorgesehen, in der die in der Folienbahn 8 geformten Mulden 14 mit Produkten 16 befüllt werden.

Die Siegelstation 3 verfügt über eine Hubeinrichtung 21 und über eine verschließbare Kammer 17, in der die Atmosphäre in den Mulden 14 vor dem Versiegeln zum Beispiel durch Evakuieren oder Gasspülen mit einem Austauschgas oder mit einem Gasgemisch ersetzt werden kann.

Die Querschneideeinrichtung 4 ist als Stanze ausgebildet, die die Folienbahn 8 und die Deckelfolie 10 in einer Richtung quer zur Produktionsrichtung R zwischen benachbarten Mulden 14 durchtrennt. Dabei arbeitet die Querschneideeinrichtung 4 derart, dass die Folienbahn 8 nicht über die gesamte Breite aufgetrennt wird, sondern zumindest in einem Randbereich nicht durchtrennt wird. Dies ermöglicht einen kontrollierten Weitertransport durch die Vorschubeinrichtung.

Die Längsschneideeinrichtung 5 ist in der dargestellten Ausführungsform als eine Messeranordnung mit mehreren rotierenden Rundmessern ausgebildet, mit der die Folienbahn 8 und die Deckelfolie 10 zwischen benachbarten Mulden 14 und am seitlichen Rand der Folienbahn 8 durchtrennt werden, so dass hinter der Längsschneideeinrichtung 5 vereinzelte Verpackungen vorliegen.

Die Tiefziehverpackungsmaschine 1 verfügt ferner über eine Steuerung 18. Sie hat die Aufgabe, die in der Tiefziehverpackungsmaschine 1 ablaufenden Prozesse zu steuern und zu überwachen. Eine Anzeigevorrichtung 19 mit Bedienelementen 20 dient zum Visualisieren bzw. Beeinflussen der Prozessabläufe in der Verpackungsmaschine 1 für bzw. durch einen Bediener.

Die generelle Arbeitsweise der Verpackungsmaschine 1 wird im Folgenden kurz beschrieben.

Die Folie 8 wird von der Zufuhrrolle 7 abgezogen und durch die Vorschubeinrichtung in die Formstation 2 transportiert. In der Formstation 2 werden durch Tiefziehen Mulden 14 in der Folienbahn 8 gebildet. Die Mulden 14 werden zusammen mit dem umgebenden Bereich der Folienbahn 8 in einem Hauptarbeitstakt zu der Einlegestrecke 15 weitertransportiert, in der sie mit Produkten 16 befüllt werden.

Anschließend werden die befüllten Mulden 14 zusammen mit dem sie umgebenden Bereich der Folienbahn 8 in dem Hauptarbeitstakt durch die Vorschubeinrichtung in die Siegelstation 3 weitertransportiert. Die Deckelfolie 10 wird nach einem Ansiegelvorgang an die Folienbahn 8 mit der Vorschubbewegung der Folienbahn 8 weitertransportiert. Dabei wird die Deckelfolie 10 von dem Materialspeicher 9 abgezogen. Durch das Ansiegeln der Deckelfolie 10 auf die Mulden 14 entstehen verschlossene Verpackungen, die in den nachfolgenden Schneidungen 4 und 5 vereinzelt und mittels der Abfuhreinrichtung 13 aus der Tiefziehverpackungsmaschine 1 heraus transportiert werden.

Eine Gruppe von Mulden 14, die in der Formstation 2 während eines Arbeitstaktes in die Folienbahn 8 geformt werden und dann intermittierend in Produktionsrichtung R transportiert wird, ist als ein Format definiert. Ein Format kann mehrere Verpackungen bzw. Mulden 14 sowohl in Produktionsrichtung R wie auch quer dazu aufweisen, beispielsweise 4 x 4 Mulden. Bei einem Formatwechsel von 4 x 4 auf beispielsweise 3 x 3 Mulden müssen sowohl Teile der Formstation 2, wie auch Teile der Siegelstation 3, im Speziellen eine Siegelbrille und eine Siegelplatte, gewechselt werden.

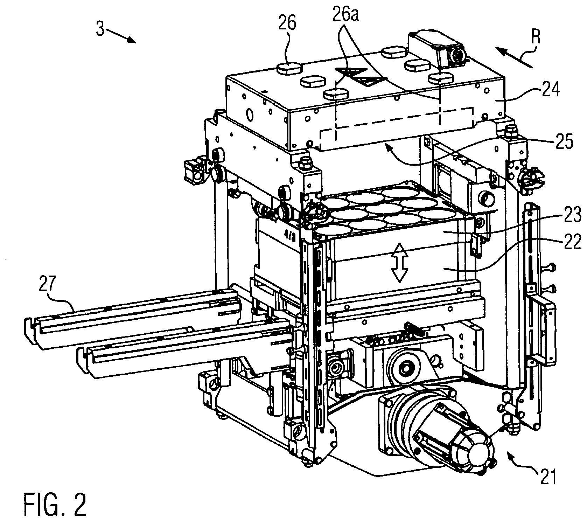

In Fig. 2 ist eine Siegelstation 3 in einer geöffneten Stellung gezeigt. Die Hubeinrichtung 21 kann ein Siegelwerkzeugunterteil 22 mit der darauf befindlichen formatabhängigen Siegelbrille 23 auf und ab bewegen. Die Siegelstation 3 weist oben ein Siegelwerkzeugoberteil 24 auf, in dem eine Siegelplatte 25 angeordnet ist. Die Siegelplatte 25 ist über Befestigungsmittel 26a unter Abdeckungen 26 im Siegelwerkzeugoberteil 24 lösbar befestigt. In diesem Beispiel sind als Befestigungsmittel sechs Schraubverbindungen 26a vorgesehen. An der Siegelstation 3 sind quer und seitlich zur Produktionsrichtung R Arme 27 vorgesehen, um das Siegelwerkzeugunterteil 22 seitlich auf den Armen 27 herausziehen zu können.

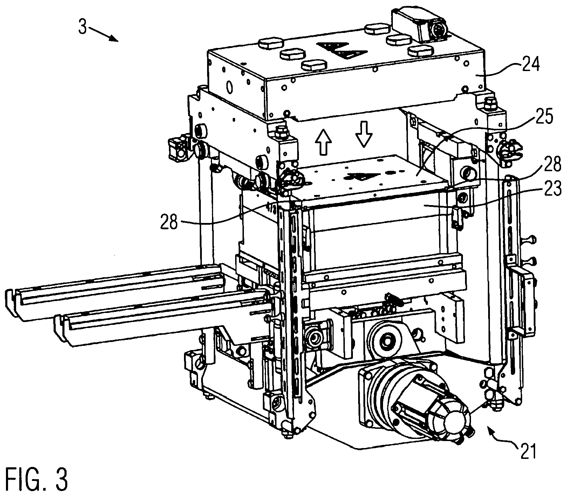

Fig. 3 zeigt die Siegelstation 3 in einer unteren Wechselposition, nachdem die Hubeinrichtung 21 die Siegelbrille 23 nach oben an das Siegelwerkzeugoberteil 24 angehoben hat, um die Siegelplatte 25 auf der Siegelbrille 23 aufzunehmen, nachdem die Siegelplatte 25 durch Lösen der Schraubverbindungen von dem Siegelwerkzeugoberteil 24 gelöst wurde.

Während einer Abbewegung der Hubeinrichtung 21 (siehe Pfeile) liegt die Siegelplatte 25 auf der Siegelbrille 23 auf und ist dabei durch Stifte 28 als Zentrierhilfen zentriert. Während einer Aufbewegung der Hubeinrichtung 21 ist dies gleichermaßen der Fall und umso wichtiger, damit die Siegelplatte 25 positionsgenau und ohne eine Kollision in das Siegelwerkzeugoberteil 24 einfahren kann.

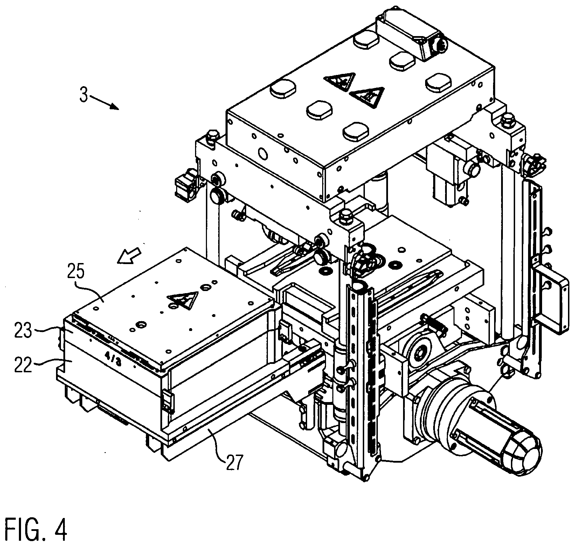

In Fig. 4 ist die seitliche Wechselposition (siehe Pfeil) für die Siegelbrille 23 und die Siegelplatte 25 gezeigt, wobei beide auf dem Siegelwerkzeugunterteil 22 aufliegen. Alle drei Komponenten 22, 23, 25 sind hier seitlich auf den schienenförmigen Armen 27 aus der Siegelstation 3 herausgezogen worden. Während sich diese Teile 22, 23, 25 auf den Armen 27 befinden, kann eine Bedienperson ergonomisch günstig die Siegelplatte 25 und die Siegelbrille 23 wechseln, um die Siegelstation 3 auf ein neues Format umzurüsten oder auch lediglich die Siegelbrille 23 und/oder die Siegelplatte 25 reinigen.

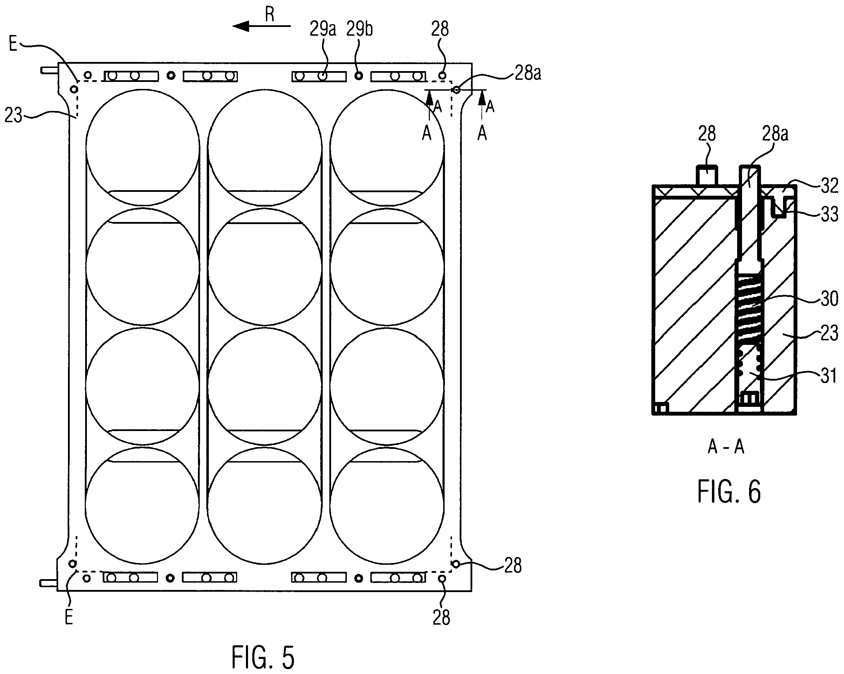

Fig. 5 zeigt in einer Draufsicht die Siegelbrille 23 mit einem Format für 4 x 3 Mulden 14. An allen vier Ecken der Siegelbrille 22 sind als Zentrierhilfe jeweils zwei Stifte 28, 28a vorgesehen, über die die Siegelplatte 25 bzw. die Ecken E der Siegelplatte 25, die durch gestrichelte Linien angedeutet sind, zentriert wird. Des Weiteren sind Begasungsstifte 29a und Evakuierungsbohrungen 29b zu sehen.

Im oberen rechten Teil der Darstellung der Fig. 5 ist ein Schnitt A-A durch den Stift 28a dargestellt, der in Fig. 6 als Vergrößerung gezeigt ist. Der Stift 28a ist über eine Druckfeder 30 und einen Einschraubbolzen 31 so in der Siegelbrille 23 montiert, dass der Stift 28a nach unten bewegt werden kann und dabei die Druckfeder 30 zusammendrückt. Auf der Siegelbrille 23 ist eine Siegeldichtung 32, die aus Silikon herstellbar ist, vorgesehen und in einer Nut 33 der Siegelbrille 23 aufgenommen.

Die Funktionsweise der Stifte 28, 28a wird anhand der Fig. 7 näher erläutert. Die Fig. 7 zeigt einen Teilausschnitt als Schnittansicht durch einen Stift 28a in Produktionsrichtung R. Das Siegelwerkzeugunterteil 22 mit der darüber angeordneten Siegelbrille 23 und der Siegeldichtung 32 klemmt in der Arbeitsposition die Folienbahn 8 und die Deckelfolie 10 gegen das Siegelwerkzeugoberteil 24, so dass wenigstens die Folienbahn 8 ringsum entlang der Außenabmessung der Siegeldichtung 22 gegen die Siegelbrille 23 hermetisch abdichtet, um eine Kammer 17 zum Evakuieren und/oder Begasen des Inneren der Verpackung bzw. der Mulde 14 zu bilden. Bei der Bewegung der Siegelbrille 23 aufwärts an das Siegelwerkzeugoberteils 24 kommen kurz vor Erreichen der Arbeitsposition der Stift 28a und alle weiteren Stifte 28 mit ihrer Oberseite mit der Folienbahn 8, die an der Unterseite des Siegelwerkzeugoberteil 24 anliegt, in Kontakt und werden nach unten in die Siegelbrille 23 gedrückt bzw. abgesenkt (siehe Pfeil nach unten), also unterhalb der Folienbahn 8 verdrängt. Die Druckfeder 30 ist so konfiguriert, dass die Federkraft nur so groß ist, dass der Stift 28a selbsttätig bei einer Bewegung abwärts mittels der Hubeinrichtung 21 wieder aus der Siegelbrille 23 heraussteht, um die Siegelplatte 25 zu zentrieren, und der Stift 28a die Folienbahn 8 in der Arbeitsposition nicht beschädigt. Dies gilt für alle Stifte 28.

Denkbar ist es, als Zentrierhilfen anstatt der Stifte 28 Formteile vorzusehen, die beispielsweise mit jeweils einer Ecke E der Siegelplatte 25 an zwei Seiten zusammenwirken. Die Formteile könnten eine L-Form aufweisen und vorzugsweise sind vier Formteile vorgesehen. Die Formteile können mit einer oder mehreren Federn entsprechend der Erfindung zusammenwirken. Durch die größere Fläche an der Oberseite eines Formteils gegenüber einem Stift 28 ergibt sich eine geringere Flächenpressung an der Folienbahn 8 und somit eine Reduzierung der Belastung auf die Folienbahn 8.

## Patentansprüche

1. Tiefziehverpackungsmaschine (1) mit einer Siegelstation (3), die eine Hubeinrichtung (21), eine Siegelplatte (25) und eine Siegelbrille (23) umfasst, wobei die Siegelplatte (25) lösbar an einem Siegelwerkzeugoberteil (24) angeordnet ist, und wobei die Siegelbrille (23) an einem Siegelwerkzeugunterteil (22) lösbar angeordnet ist, **dadurch gekennzeichnet, dass** die Siegelbrille (23) Zentrierhilfen (28, 28a) zum Zentrieren der Siegelplatte (25) auf der Siegelbrille (23) aufweist, wobei die Zentrierhilfen (28, 28a) so gestaltet sind, dass sie beim Klemmen einer Folienbahn (8) zwischen der Siegelbrille (23) und dem Siegelwerkzeugoberteil (24) durch das Siegelwerkzeugoberteil (24) unterhalb der Folienbahn (8) verdrängbar sind.

2. Tiefziehverpackungsmaschine nach Anspruch 1, **dadurch gekennzeichnet, dass** die Siegelplatte (25) von der Siegelbrille (23) aufnehmbar ist.

3. Tiefziehverpackungsmaschine nach einem der vorangehenden Ansprüche, **dadurch gekennzeichnet, dass** das Siegelwerkzeugunterteil (22) gemeinsam mit der Siegelbrille (23) und der Siegelplatte (25) seitlich aus der Tiefziehverpackungsmaschine (1) zum Wechseln der Siegelbrille (23) und Siegelplatte (25) herausbewegbar ist.

4. Tiefziehverpackungsmaschine nach einem der vorangehenden Ansprüche, **dadurch gekennzeichnet, dass** die Siegelplatte (23) mittels Schraubverbindungen (26a) am Siegelwerkzeugoberteil (24) fixierbar ist und die Schraubenverbindungen von außerhalb des Siegelwerkzeugoberteils (24) zugänglich sind.

5. Tiefziehverpackungsmaschine nach einem der Ansprüche 1 bis 3, **dadurch gekennzeichnet, dass** die Siegelplatte (23) automatisch mittels wenigstens eines Aktors am Siegelwerkzeugoberteil (24) fixierbar ist.

6. Tiefziehverpackungsmaschine nach einem der vorangehenden Ansprüche, **dadurch gekennzeichnet, dass** die Siegelbrille (23) wenigstens an zwei, vorzugsweise an vier Ecken (E) Zentrierhilfen (28, 28a) zum Orientieren jeweils einer Ecke (E) der Siegelplatte (23) aufweist.

7. Tiefziehverpackungsmaschine nach einem der vorangehenden Ansprüche, **dadurch gekennzeichnet, dass** eine Zentrierhilfe (28, 28a) einen oder mehrere gefederte Stifte (28, 28a) umfasst.

8. Tiefziehverpackungsmaschine nach Anspruch 7, **dadurch gekennzeichnet, dass** die federten Stifte (28, 28a) derart in die Siegelbrille (23) in einer Bewegungsrichtung der Hubeinrichtung (21) absenkbar sind, dass die Folienbahn (8) nicht beschädigt wird.

9. Verfahren zum gemeinsamen Wechseln einer Siegelbrille (23) und einer Siegelplatte (25) an einer Siegelstation (3) einer Tiefziehverpackungsmaschine (1), wobei das Verfahren folgende Schritte vorsieht:
- Anheben der Siegelbrille (23) mittels einer Hubeinrichtung (21) nach oben an ein Siegelwerkzeugoberteil (24), nachdem Folienbahnen (8, 10) dazwischen entfernt wurden,
- Lösen der Siegelplatte (25) von dem Siegelwerkzeugoberteil (24), um die Siegelplatte (25) auf der Siegelbrille (23) abzulegen,
- Absenken der Siegelbrille (23) und der Siegelplatte (25) mittels der Hubeinrichtung (21), wobei beim Absenken Zentrierhilfen (28, 28a), die an der Siegelbrille (23) vorgesehen sind, mit der Siegelplatte (25) zusammenwirken,
- und wobei die Zentrierhilfen (28, 28a) in der Siegelbrille (25) verdrängt werden, sobald die Siegelplatte (23) in dem Siegelwerkzeugoberteil (24) befestigt wird oder mit der Folienbahn (8) zusammenwirkt.

10. Verfahren nach Anspruch 9, **dadurch gekennzeichnet, dass** die Siegelbrille (23) und die Siegelplatte (25) in einer unteren Wechselstellung der Hubeinrichtung (21) seitlich aus der Tiefziehverpackungsmaschine (1) heraus bewegt werden, um die Siegelbrille (23) und die Siegelplatte (25) für einen Wechsel oder für Wartungszwecke zugänglich zu machen.

11. Verfahren nach einem der Ansprüche 9 oder 10, **dadurch gekennzeichnet, dass** die Siegelbrille (23) mittels der Hubeinrichtung (21) die Siegelplatte (25) nach oben bis an das Siegelwerkzeugoberteil (24) anhebt, um die Siegelplatte (25) an dem Siegelwerkzeugoberteil (24) zu befestigen.

## Claims

1. Deep-drawing packaging machine (1) with a sealing station (3), comprising a lifting device (21), a sealing plate (25), and a sealing frame (23), said sealing frame (25) being releasably arranged at an upper sealing tool part (24), and the sealing frame (23) being releasably arranged at a lower sealing tool part (22), **characterized in that** said sealing frame (23) comprises centering aids (28, 28a) for centering said sealing plate (25) on said sealing frame (23), wherein said centering aids (28, 28a) are designed such that they can be displaced underneath the film web (8) by the upper sealing tool part (24) during the clamping of a film web (8) between the sealing frame (23) and the upper sealing tool part (24).

2. Deep-drawing packaging machine according to claim 1, **characterized in that** said sealing plate (25) may be received by said sealing frame (23).

3. Deep-drawing packaging machine according to one of the preceding claims, **characterized in that** said lower sealing tool part (22) may be laterally moved out of the deep-drawing packaging machine (1) together with the sealing frame (23) and the sealing plate (25) for changing the sealing frame (23) and the sealing plate (25).

4. Deep-drawing packaging machine according to one of the preceding claims, **characterized in that** said sealing plate (23) may be fixed to the upper sealing tool part (24) by means of threaded joints (26a), and said threaded joints are accessible from outside the upper sealing tool part (24).

5. Deep-drawing packaging machine according to one of claims 1 to 3, **characterized in that** said sealing plate (23) may be automatically fixed to the upper sealing tool part (24) by means of at least one actuator.

6. Deep-drawing packaging machine according to one of the preceding claims, **characterized in that** said sealing frame (23) comprises centering aids (28, 28a) at at least two, preferably at four corners (E) for orienting one corner (E) each of the sealing plate (23).

7. Deep-drawing packaging machine according to one of the preceding claims, **characterized in that** a centering aid (28, 28a) comprises one or several spring-loaded pins (28, 28a).

8. Deep-drawing packaging machine according to claim 7, **characterized in that** said spring-loaded pins (28, 28a) may be lowered into the sealing frame (23) in a moving direction of the lifting device (21) such that the film web (8) is not damaged.

9. Method for changing a sealing frame (23) together with a sealing plate (25) at a sealing station (3) of a deep-drawing packaging machine (1), the method providing the following steps:
- lifting the sealing frame (23) upwards by means of a lifting device (21) to an upper sealing tool part (24) after film webs (8, 10) between them have been removed,
- releasing the sealing plate (25) from the upper sealing tool part (24) to place the sealing plate (25) onto the sealing frame (23),
- lowering the sealing frame (23) and the sealing plate (25) by means of the lifting device (21), wherein during lowering, centering aids (28, 28a) provided at the sealing frame (23) cooperate with the sealing plate (25),
- and wherein the centering aids (28, 28a) are displaced in the sealing frame (25) as soon as the sealing plate (23) is fastened in the upper sealing tool part (24) or cooperates with the film web (8).

10. Method according to claim 9, **characterized in that** the sealing frame (23) and the sealing plate (25) are laterally moved out of the deep-drawing packaging machine (1) in a lower changing position of the lifting device (21) to grant access to the sealing frame (23) and the sealing plate (25) for changing or maintanance purposes.

11. Method according to one of claims 9 or 10, **characterized in that** the sealing frame (23) lifts the sealing plate (25) upwards to the upper sealing tool part (24) by means of the lifting device (21) to fasten the sealing plate (25) at the upper sealing tool part (24).

## Revendications

1. Machine d'emballage par emboutissage ou thermoformage (1) avec un poste de scellage (3), qui comprend un dispositif de soulèvement (21), une plaque de scellage (25) et une lunette de scellage (23), la plaque de scellage (25) étant agencée de manière amovible sur une partie supérieure d'outillage de scellage (24), et la lunette de scellage (23) étant agencée de manière amovible sur une partie inférieure d'outillage de scellage (22), **caractérisée en ce que** la lunette de scellage (23) comporte des aides au centrage (28, 28a) pour assurer le centrage de la plaque de scellage (25) sur la lunette de scellage (23), les aides au centrage (28, 28a) étant conçues de manière telle, que lors du serrage d'une bande de film (8) entre la lunette de scellage (23) et la partie supérieure d'outillage de scellage (24), elles puissent être repoussées par la partie supérieure d'outillage de scellage (24) sous la bande de film (8).

2. Machine d'emballage par emboutissage ou thermoformage selon la revendication 1, **caractérisée en ce que** la plaque de scellage (25) peut être reçue dans la lunette de scellage (23).

3. Machine d'emballage par emboutissage ou thermoformage selon l'une des revendications précédentes, **caractérisée en ce que** la partie inférieure d'outillage de scellage (22) peut être déplacée, en commun avec la lunette de scellage (23) et la plaque de scellage (25), latéralement hors de la machine d'emballage par emboutissage ou thermoformage (1), pour l'échange de la lunette de scellage (23) et de la plaque de scellage (25).

4. Machine d'emballage par emboutissage ou thermoformage selon l'une des revendications précédentes, **caractérisée en ce que** la plaque de scellage (23) peut être fixée au moyen de liaisons par vis (26a), à la partie supérieure d'outillage de scellage (24), et les liaisons par vis sont accessibles à partir de l'extérieur de la partie supérieure d'outillage de scellage (24).

5. Machine d'emballage par emboutissage ou thermoformage selon l'une des revendications 1 à 3, **caractérisée en ce que** la plaque de scellage (23) peut être fixée automatiquement, au moyen d'au moins un actionneur, sur la partie supérieure d'outillage de scellage (24).

6. Machine d'emballage par emboutissage ou thermoformage selon l'une des revendications précédentes, **caractérisée en ce que** la lunette de scellage (23) comporte au niveau d'au moins deux, de préférence de quatre coins (E), des aides au centrage (28, 28a) pour assurer respectivement l'orientation d'un coin (E) de la plaque de scellage (23).

7. Machine d'emballage par emboutissage ou thermoformage selon l'une des revendications précédentes, **caractérisée en ce qu'**une aide au centrage (28, 28a) comprend une ou plusieurs broches (28, 28a) montées sur ressort.

8. Machine d'emballage par emboutissage ou thermoformage selon la revendication 7, **caractérisée en ce que** les broches (28, 28a) montées sur ressort peuvent être abaissées dans la lunette de scellage (23), selon une direction de mouvement du dispositif de soulèvement (21), de manière à ne pas endommager la bande de film (8).

9. Procédé permettant l'échange simultané d'une lunette de scellage (23) et d'une plaque de scellage (25) dans un poste de scellage (3) d'une machine d'emballage par emboutissage ou thermoformage (1), le procédé prévoyant les étapes suivantes :
- soulèvement de la lunette de scellage (23) vers le haut au moyen d'un dispositif de soulèvement (21), contre une partie supérieure d'outillage de scellage (24), après retrait de bandes de film (8, 10) situées entre ces éléments,
- détachement de la plaque de scellage (25) de la partie supérieure d'outillage de scellage (24), en vue de déposer la plaque de scellage (25) sur la lunette de scellage (23),
- abaissement de la lunette de scellage (23) et de la plaque de scellage (25) au moyen du dispositif de soulèvement (21), des aides au centrage (28, 28a), qui sont prévues sur la lunette de scellage (23), interagissant avec la plaque de scellage (25) lors de l'abaissement,
- et les aides au centrage (28, 28a) étant repoussées dans la lunette de scellage (25) dès que la plaque de scellage (23) est fixée dans la partie supérieure d'outillage de scellage (24), ou interagit avec la bande de film (8).

10. Procédé selon la revendication 9, **caractérisé en ce que** la lunette de scellage (23) et la plaque de scellage (25), dans une position d'échange inférieure du dispositif de soulèvement (21), sont déplacées latéralement hors de la machine d'emballage par emboutissage ou thermoformage (1), pour rendre accessible la lunette de scellage (23) et la plaque de scellage (25) en vue d'un échange ou à des fins d'entretien.

11. Procédé selon l'une des revendications 9 ou 10, **caractérisé en ce que** la lunette de scellage (23) soulève vers le haut, au moyen du dispositif de soulèvement (21), la plaque de scellage (25) jusque contre la partie supérieure d'outillage de scellage (24), en vue de fixer la plaque de scellage (25) à la partie supérieure d'outillage de scellage (24).
